## Europäisches Patentamt

## European Patent Office

## Office européen des brevets

(11) Veröffentlichungsnummer: **0 029 927**

**A1**

(12) **EUROPÄISCHE PATENTANMELDUNG**

(21) Anmeldenummer: 80106781.0

(22) Anmeldetag: 04.11.80

(51) Int. Cl.³: **C 08 L 27/06**
**C 08 L 91/08, C 08 K 5/09**

(30) Priorität: 06.11.79 DE 2944770

(43) Veröffentlichungstag der Anmeldung:
10.06.81 Patentblatt 81/23

(84) Benannte Vertragsstaaten:
AT BE CH DE FR GB IT LI LU NL SE

(71) Anmelder: Chemische Werke München Otto Bärlocher GmbH
Riesstrasse 16
D-8000 München 50(DE)

(72) Erfinder: Rosenthal, Christian, Dr.
Riesstrasse 16
D-8000 München 50(DE)

(72) Erfinder: Rieber, Gernot, Dr. Dipl.-Chem.
Hofbauernstrasse 1a
D-8000 München 60(DE)

(72) Erfinder: Grasmück, Martin
Kettelerstrasse 69
D-8500 Nürnberg 50(DE)

(72) Erfinder: Hacker, Peter
Zaubzerstrasse 42
D-8000 München 80(DE)

(74) Vertreter: Patentanwälte Dipl.-Ing. A. Grünecker,
Dr.-Ing. H. Kinkeldey, Dr.-Ing. W. Stockmair,
Dr. rer. nat. K. Schumann, Dipl.-Ing. P.H. Jakob, Dr. rer.
nat. G. Bezold Maximilianstrasse 43
D-8000 München 22(DE)

(54) Stabilisator-Gleitmittel-Zusammensetzung für halogenhaltige Vinylpolymerisate.

(57) Die Erfindung betrifft Stabilisator-Gleitmittel-Zusammensetzungen für halogenhaltige Vinylpolymerisate, wie Polyvinylchlorid, die mindestens eine basische Bleiseife mindestens einer Fettsäure sowie Paraffin enthalten. Die erfindungsgemäßen Zusammensetzungen sind dadurch gekennzeichnet, daß als Paraffin Mikroparaffin enthalten ist. Die erfindungsgemäßen Zusammensetzungen eignen sich insbesondere als Zusätze bei der Herstellung von Kunststoffrohren oder -profilen aus halogenhaltigen Vinylpolymerisaten.

0029927

PATENTANWÄLTE
REPRESENTATIVES BEFORE THE
EUROPEAN PATENT OFFICE

A. GRÜNECKER
DIPL.-ING

H. KINKELDEY
DR.-ING

W. STOCKMAIR
DR.-ING · AeE (CALTECH)

K. SCHUMANN
DR RER NAT DIPL-PHYS

P. H. JAKOB
DIPL.-ING

G. BEZOLD
DR RER NAT · DIPL-CHEM

8 MÜNCHEN 22
MAXIMILIANSTRASSE 43

4. November 1980
EP 221-603/ks

Chemische Werke München
Otto Bärlocher GmbH
Riesstr. 16, 8000 München 50

## Stabilisator-Gleitmittel-Zusammensetzung für halogenhaltige Vinylpolymerisate

### Beschreibung

Die Erfindung betrifft eine Stabilisator-Gleitmittel-Zusammensetzung für halogenhaltige Vinylpolymerisate, enthaltend mindestens eine basische Bleiseife mindestens einer Fettsäure und Paraffin.

Es ist bereits bekannt, halogenhaltige Vinylpolymerisate mit einem Stabilisator-Gleitmittel-Gemisch zu stabilisieren. Ein herkömmliches Stabilisator-Gleitmittel-Gemisch, insbesondere für Hart-PVC-Rohre und -Profile, hat beispielsweise folgende Zusammensetzung: 20 - 30 % basische Bleisalze von anorganischen Säuren (wie dreibasisches Bleisulfat, zweibasisches Bleiphosphit oder zweibasisches Bleiphosphit-sulfit), 20 - 30 % neutrales Bleistearat, 20 - 30 % zweibasisches Bleistearat, 15 - 20 % Calciumstearat und 10 - 15 % eines organischen Gleitmittels, wie Paraffin, und die gleiche Menge einer Fettsäure, wie Stearinsäure. Es wurden große Anstrengungen zur Schaffung von Gemischen unternommen, welche den Einsatz geringerer Mengen erlauben und sich billiger herstellen lassen. Dabei hat sich im allgemeinen die Tendenz durchgesetzt, das zweibasische Bleistearat ganz oder teilweise durch neutrales Bleistearat zu ersetzen; ferner hat man versucht, den Anteil an basischem Bleisalz so niedrig wie möglich zu halten, um dieses wegen der hohen Bleipreise relativ teure Produkt sparsam zu verwenden. Es ist jedoch keine Stabilisator-Gleitmittel-Zusammensetzung für Hart-PVC-Rohre oder -Profile bekanntgeworden, deren Anteil an basischen Bleisalzen unter 20 % betragen hätte, weil bei den bisherigen Verfahren die Anwesenheit von basischen Bleisalzen in einer Menge von mindestens 20 % zur Erreichung der notwendigen Hitzestabilität unerläßlich war.

Die bisher bekannten Stabilisator-Gleitmittel-Zusammensetzungen weisen bezüglich der Verarbeitung, insbesondere bei der Extrusion von Kunststoffrohren oder -profilen, keine befriedigenden Ergebnisse auf. So müssen bisher bei der Extrusion infolge des unruhigen Laufes der Mischung im Fall von Druckrohren erheblich höhere Wanddicken gefahren werden, um die geforderten Wandstärken mit Sicherheit einhalten zu können. Dies bewirkt bei den großen Mengen der hergestellten Rohre einen erheblichen Materialmehrverbrauch.

Der vorliegenden Erfindung liegt deshalb die Aufgabe zugrunde, eine neue und verbesserte Stabilisator-Gleitmittel-Zusammensetzung zur Verfügung zu stellen, welche es erlaubt, Kosten einzusparen, und welche besonders die bisherigen Nachteile bei der Extrusion von Kunststoffrohren oder -profilen überwindet.

Diese Aufgabe ist bei einer Stabilisator-Gleitmittel-Zusammensetzung der eingangs genannten Art dadurch gelöst, daß als Paraffin Mikroparaffin enthalten ist.

Die erfindungsgemäßen Zusammensetzungen, die als Bleiverbindungen zwingend nur basische Bleiseifen, denen Mikroparaffine zugesetzt sind, enthalten müssen, zeigen eine ausgezeichnete Stabilisatorwirkung und geben ferner überraschenderweise bei der Extrusion von Rohren und Profilen einen wesentlich ruhigeren Lauf des Kunststoffmaterials, wobei das sogenannte Schieben, d.h. die ungleichmäßige Extrusion, innerhalb der Düse vermieden wird und das Hart-Polymerisat den Extruder völlig gleichmäßig und ohne Belagbildung verläßt.

Die erfindungsgemäßen Zusammensetzungen enthalten basische Bleiseife zu Mikrowachs im Gewichtsverhältnis von 30 bis 40 zu 5 bis 20, bevorzugt 30 bis 40 zu 5 bis 15.

Die erfindungsgemäß verwendeten Mikroparaffine (Mikrowachse) sind Gemische fester, gereinigter, überwiegend verzweigter, gesättigter, mikrokristalliner Kohlenwasserstoffe aus Erdöl mit einem Schmelzbereich von etwa 55 - 90°C. Beispielsweise hat ein erfindungsgemäß geeignetes Mikroparaffin einen Schmelzbereich von 77 - 86°C und weist eine Penetration von maximal 18 und einen Ölgehalt von maximal 1,5 auf.

Diese Mikroparaffine unterscheiden sich völlig von den herkömmlich verwendeten Paraffinen, welche eine grobkristalline Struktur mit einem Erweichungspunkt von 50 - 65°C aufweisen. Ebenso unterscheiden sie sich von den herkömmlichen Syntheseparaffinen, welche eine feinkristalline und polymolekulare Struktur mit Erweichungspunkten über 100°C aufweisen.

Vorzugsweise enthalten die erfindungsgemäßen Zusammensetzungen Bleiseifen, denen Fettsäuren mit 12 - 22 Kohlenstoffatomen zugrundeliegen.

Weiterhin ist es bevorzugt, daß die erfindungsgemäßen Zusammensetzungen Bleistearat als Bleiseife enthalten.

Obwohl die erfindungsgemäßen Zusammensetzungen es ermöglichen, völlig auf basische Bleisalze zu verzichten, können sie zusätzlich basische Bleisalze enthalten. Bevorzugte basische Bleisalze sind hierbei dreibasisches Bleisulfat, zweibasisches Bleiphosphit oder zweibasisches Bleiphosphit-sulfit.

Enthalten die erfindungsgemäßen Zusammensetzungen solche basische Bleisalze, so ist es zweckmäßig, daß ihr Anteil maximal 15 Gew.-%, bezogen auf das Gesamtgewicht der Zusammensetzung, beträgt. Besonders bevorzugt ist ein Gehalt von maximal 10 Gew.-%, bezogen auf das Gesamtgewicht der Zusammensetzung, an basischen Bleisalzen.

Die Zusammensetzungen können, müssen aber nicht, weiterhin zweckmäßigerweise zusätzlich übliche Antioxidantien enthalten. Weiterhin ist es zweckmäßig, daß die Zusammensetzungen, wegen der besseren Verteilbarkeit und Dosierbarkeit, zusätzlich geringe Mengen inerte Füllstoffe enthalten. Dabei ist es besonders bevorzugt, daß als Füllstoff Calciumcarbonat (Kreide) enthalten ist. Die erfindungsgemäßen Zusammensetzungen können in üblicher Weise durch Vermischen bzw. Verschmelzen nach bekannten Verfahren hergestellt werden und ebenfalls in üblicher Weise beispielsweise zu Schuppen, zylindrischen Körpern oder Perlen verformt werden.

Die erfindungsgemäßen Zusammensetzungen eignen sich bevorzugt als Zusätze bei der Herstellung von Kunststoffrohren oder -profilen aus halogenhaltigen Vinylpolymerisaten. Besonders bevorzugt ist ihre Verwendung bei der Herstellung von Kunststoffrohren oder -profilen aus Polyvinylchlorid.

Bei der ebengenannten Verwendung ist es zweckmäßig, daß zu 100 Teilen des halogenhaltigen Vinylpolymerisats 1,4 bis 1,8 Teile der erfindungsgemäßen Zusammensetzung zugegeben werden. Durch den Einsatz der erfindungsgemäßen Zusammensetzungen ist es somit möglich, den Bleigehalt im fertigen Kunststoffteil auf einen Wert von etwa 0,5 % zu reduzieren. Bei Verwendung einer der eingangs beschriebenen bekannten Zusammensetzungen beträgt der Bleigehalt im Endprodukt hingegen etwa 1 %. (Von den bekannten Zusammensetzungen werden auf 100 Teile halogenhaltiges Vinylpolymerisat 2,2 - 2,6 Teile Stabilisator-Gleitmittel-Zusammensetzung eingesetzt, während bei Verwendung der erfindungsgemäßen Zusammensetzungen 1,4 Teile völlig ausreichend sind.) Es ist davon auszugehen, daß alle Additive zu Kunststoffen, insbesondere zu Polyvinylchlorid, Fremdstoffe sind, welche die mechanischen Eigenschaften des Materials grundsätzlich verschlechtern. Je weniger davon eingesetzt wird, desto besser ist es für die mechanischen Eigenschaften des Fertigprodukts. Da die erfindungsgemäßen Zusammensetzungen mit einem Minimum an wirksamen Zusatzstoffen auskommen, wird erreicht, daß die mechanischen Werte der damit hergestellten Erzeugnisse besser sind als die, welche nach herkömmlichen Methoden hergestellt wurden.

Während beim Einsatz herkömmlicher Stabilisator-Gleitmittel-Zusammensetzungen bei der Extrusion von Rohren infolge des unruhigen Laufes der Mischung erheblich höhere Wanddicken gefahren werden mußten, ist es bei Verwendung einer erfindungsgemäßen Zusammensetzung möglich, die Toleranzen enger zu halten und damit Kunststoff einzusparen. Weiterhin wird durch den Einsatz der erfindungsgemäßen Zusammensetzungen der Bleianteil, beispielsweise in Trinkwasserrohren, der aus physiologischen Gründen angestrebt wird, herabgesetzt. Die so hergestellten Rohre weisen ebenfalls wesentlich verbesserte Zeitstandwerte sowie verbesserte Innen- und Außenoberflächen auf.

Die mittels Einsatz der erfindungsgemäßen Zusammensetzungen mögliche Materialeinsparung bei der Extrusion von PVC-Druckrohren wird anhand der nachfolgenden Zahlenbeispiele besonders deutlich:

|  | bekannte Zusammensetzung | erfindungsgemäße Zusammensetzung |
|---|---|---|
| Bisherige Toleranz | 5,4 - 5,9 | 5,4 - 5,7 |
| Mittelwert | 5,65 | 5,55 |
| Produktionsgewicht | 2,59 kg/m | 2,55 kg/m |

In Anbetracht eines hohen Produktionsausstoßes von PVC-Rohren wird ersichtlich, daß es durch den Einsatz der erfindungsgemäßen Stabilisator-Gleitmittel-Zusammensetzungen möglich ist, erhebliche Materialmengen einzusparen.

PATENTANWÄLTE

REPRESENTATIVES BEFORE THE
EUROPEAN PATENT OFFICE

A. GRÜNECKER
DIPL.-ING

H. KINKELDEY
DR.-ING

W. STOCKMAIR
DR.-ING · AeE ICALTECH

K. SCHUMANN
DR RER NAT DIPL.-PHYS

P. H. JAKOB
DIPL.-ING

G. BEZOLD
DR RER NAT · DIPL-CHEM

8 MÜNCHEN 22
MAXIMILIANSTRASSE 43

4. November 1980
EP 221-603/ks

Chemische Werke München
Otto Bärlocher GmbH
Riesstr. 16, 8000 München 50

Patentansprüche

1. Stabilisator-Gleitmittel-Zusammensetzung für halogenhaltige Vinylpolymerisate, enthaltend mindestens eine basische Bleiseife mindestens einer Fettsäure und Paraffin, dadurch g e k e n n z e i c h n e t , daß als Paraffin Mikroparaffin enthalten ist.

2. Zusammensetzung nach Anspruch 1, dadurch g e - k e n n z e i c h n e t , daß der basischen Bleiseife mindestens eine Fettsäure mit 12 - 22 Kohlenstoffatomen zugrundeliegt.

3. Zusammensetzung nach Anspruch 1 oder 2, dadurch g e k e n n z e i c h n e t , daß als basische Bleiseife Bleistearat enthalten ist.

4. Zusammensetzung nach einem der vorangehenden Ansprüche, dadurch g e k e n n z e i c h n e t , daß sie zusätzlich mindestens ein basisches Bleisalz einer anorganischen Säure in einer Menge von höchstens 15 Gewichtsprozent, bezogen auf das Gesamtgewicht der Zusammensetzung, enthält.

5. Zusammensetzung nach Anspruch 4, dadurch g e - k e n n z e i c h n e t , daß als basisches Bleisalz dreibasisches Bleisulfat und/oder zweibasisches Bleiphosphit und/oder zweibasisches Bleiphosphit-sulfit enthalten sind.

6. Zusammensetzung nach einem der vorangehenden Ansprüche, dadurch g e k e n n z e i c h n e t , daß sie zusätzlich mindestens ein übliches Antioxidans enthält.

7. Zusammensetzung nach einem der vorangehenden Ansprüche, dadurch g e k e n n z e i c h n e t , daß sie zusätzlich mindestens einen inerten Füllstoff enthält.

8. Zusammensetzung nach Anspruch 7, dadurch g e - k e n n z e i c h n e t , daß als Füllstoff Calciumcarbonat enthalten ist.

9. Verwendung der Zusammensetzung nach einem der vorhergehenden Ansprüche bei der Herstellung von Kunststoffrohren oder -profilen aus halogenhaltigen Vinylpolymerisaten, insbesondere aus Polyvinylchlorid.

10. Verwendung nach Anspruch 9, dadurch g e - k e n n z e i c h n e t , daß zu 100 Teilen des halogenhaltigen Vinylpolymerisats 1,4 bis 1,8 Teile der Zusammensetzung zugegeben werden.

**Europäisches Patentamt**

## EUROPÄISCHER RECHERCHENBERICHT

Nummer der Anmeldung

EP 80 10 6781

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe. soweit erforderlich. der maßgeblichen Teile | betrifft Anspruch | |
| | US - A - 3 072 586 (A.R. PITROT et al.)  * Ansprüche * -- | 1-10 | C 08 L 27/06   91/08 C 08 K 5/09 |
| | CA - A - 918 330 (MAGADYNE)  * Ansprüche; Seite 6, Absatz 4 bis Seite 7, Absatz 1; Seite 7, Absatz 3; Beispiele * -- | 1-10 | |
| | DE - A - 1 494 401 (ATLANTIC REFINING)  * Ansprüche; Seite 3, Absatz 5 bis Seite 4, Absatz 1; Seite 8, Absatz 2 * ----- | 1-10 | RECHERCHIERTE SACHGEBIETE (Int Cl ³) C 08 L 27/06   91/08 C 08 K 5/09 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-03-1981 | FOUQUIER |

EPA form 1503.1   06.78